(19) Europäisches Patentamt

**European Patent Office**

**Office européen des brevets**

(11) Veröffentlichungsnummer: **0 284 730 B1**

(12) **EUROPÄISCHE PATENTSCHRIFT**

(45) Veröffentlichungstag der Patentschrift: **12.08.92**

(21) Anmeldenummer: **88101570.5**

(22) Anmeldetag: **04.02.88**

(51) Int. Cl.⁵: **G01B 21/00**, G01B 5/00

(54) **Längen- oder Winkelmesseinrichtung.**

(30) Priorität: **02.04.87 DE 3711070**

(43) Veröffentlichungstag der Anmeldung:
**05.10.88 Patentblatt 88/40**

(45) Bekanntmachung des Hinweises auf die
Patenterteilung:
**12.08.92 Patentblatt 92/33**

(84) Benannte Vertragsstaaten:
**DE FR GB IT**

(56) Entgegenhaltungen:
**DE-A- 3 243 966**
**DE-B- 2 735 154**
**GB-A- 2 156 989**

(73) Patentinhaber: **Dr. Johannes Heidenhain
GmbH
Dr.-Johannes-Heidenhain-Strasse 5 Postfach
1260
W-8225 Traunreut(DE)**

(72) Erfinder: **Nelle, Günther, Dr.-Ing.
Eichenweg 12
W-8221 Bergen(DE)**

## Beschreibung

Die Erfindung betrifft eine Längen- oder Winkelmeßeinrichtung zur Messung der Relativlage zweier Objekte gemäß dem Oberbegriff des Anspruchs 1.

Derartige Längen- oder Winkelmeßeinrichtungen werden insbesondere bei Bearbeitungsmaschinen zur Messung der Relativlage eines Werkzeugs bezüglich eines zu bearbeitenden Werkstücks sowie bei Koordinatenmeßmaschinen zur Ermittlung der Lage und/oder der Abmessungen von Prüfobjekten eingesetzt.

Beispielsweise bei einer solchen Längenmeßeinrichtung ist eine Maßverkörperung mit dem einen Objekt verbunden, deren Teilung von einer mit dem anderen Objekt verbundenen Abtasteinheit zur Gewinnung von periodischen Abtastsignalen abgetastet wird, aus denen in einer nachgeschalteten Auswerteeinrichtung Positionsmeßwerte gewonnen werden, die einer Positionsanzeigeeinheit zur Anzeige in digitaler Form und/oder einer Steuereinrichtung einer Bearbeitungsmaschine zugeleitet werden, an der diese Längenmeßeinrichtung zum Einsatz gelangt.

Derartige Längenmeßeinrichtungen finden sowohl als ungekapselte als auch als gekapselte Meßeinrichtungen Verwendung.

In dem Aufsatz "Neuere Entwicklungen bei photoelektrischen Längenmeßsystemen" von A. Ernst in "Messen und Prüfen/Automatik", Juli/August 1974 ist in Bild 12 a eine ungekapselte Längenmeßeinrichtung gezeigt, bei der eine Maßverkörperung mittels mehrerer Spannpratzen an dem einen Objekt und eine Abtasteinheit mittels zweier Schrauben an dem anderen Objekt befestigt sind.

In der DE-OS 31 13 962 ist eine gekapselte Längenmeßeinrichtung beschrieben, bei der eine Maßverkörperung und eine Abtasteinheit in einem geschlossenen Gehäuse zum Schutz gegen Umwelteinflüsse gekapselt sind, das an dem einen Objekt befestigt ist. Die Abtasteinheit ist an einem Mitnehmer befestigt, der durch einen abgedichteten Längsschlitz des Gehäuses hindurchgreift und mittels zweier Schrauben an dem anderen Objekt befestigt ist.

Bei den beiden vorgenannten Längenmeßeinrichtungen wird die Abtasteinheit mittels der Führung der beiden zu messenden Objekte (Objektführung) bezüglich der Maßverkörperung geführt; diese Führung der Abtasteinheit zur Maßverkörperung muß aber zur Gewährleistung einer einwandfreien Abtastfunktion innerhalb bestimmter enger Grenzen erfolgen, so daß bei der Befestigung der Abtasteinheit bzw. des Mitnehmers mit der Abtasteinheit am zu messenden Objekt sehr enge Anbautoleranzen eingehalten werden müssen.

Um trotz dieser Abtastfunktionserfordernisse größere Anbautoleranzen zuzulassen, wird gemäß der DE-PS 28 10 341 die Abtasteinheit an einer von der Führung der zu messenden Objekte unabhängigen Hilfsführung in Form der Maßverkörperung und/oder des Gehäuses geführt und ist über ein in Meßrichtung steifes Kupplungselement gelenkig an einen Mitnehmer angekoppelt, der mittels zweier Schrauben an einem der zu messenden Objekte befestigt ist.

Üblicherweise sind der Maßstab an einem Schlitten und die Abtasteinheit an einem Bett als den zu messenden Objekten einer Bearbeitungsmaschine befestigt. Dem Abtastpunkt (Abtaststelle) des Abtastelements der Abtasteinheit zur Abtastung der Teilung der Maßverkörperung, das beispielsweise bei einer photoelektrischen Abtasteinheit durch ein Abtastteilungsfeld gebildet wird, ist nach der Befestigung der Abtasteinheit am zugehörigen zu messenden Objekt in Form des Bettes der Bearbeitungsmaschine ein Bezugspunkt des zu messenden Objekts zugeordnet; dieser Bezugspunkt kann rein fiktiv oder durch eine Marke am zu messenden Objekt (Bett) gekennzeichnet sein. Bei thermischer Normalbedingung (z. B. 20 °C) liegen in der Anfangslage des Schlittens bezüglich des Betts der Teilungsnullpunkt der Maßverkörperung, der Abtastpunkt der Abtasteinheit und der Bezugspunkt des Betts in einer Ebene senkrecht zur Meßrichtung und stimmen somit überein.

Während das Bett der Bearbeitungsmaschine im allgemeinen aus Grauguß besteht, werden bevorzugt als Materialien für den Mitnehmer Aluminium und für die Abtasteinheit Kunststoff aus Gründen einer kostengünstigen Fertigung und einer Gewichtseinsparung gewählt. Da diese unterschiedlichen Materialien unterschiedliche thermische Ausdehnungskoeffizienten $\alpha$(Objekt: $\alpha(O) = 10 \cdot 10^{-6}$ $K^{-1}$, Mitnehmer: $\alpha(M) = 21 \cdot 10^{-6}$ $K^{-1}$ und Abtasteinheit: $\alpha(A) = 35 \cdot 10^{-6}$ $K^{-1}$) aufweisen, können bei Temperaturänderungen gegenüber der thermischen Normalbedingung Relativverschiebungen zwischen dem Abtastpunkt der Abtasteinheit, dem Bezugspunkt des zu messenden Objekts und dem Teilungsnullpunkt der Maßverkörperung auftreten, die zu Nullpunktverschiebungen der Meßeinrichtung mit den entsprechenden Meßfehlern führen.

Beispielsweise bei Temperaturerhöhungen gegenüber der thermischen Normalbedingung durch die Bearbeitungsvorgänge an der Bearbeitungsmaschine treten wegen der starren Befestigung der Abtasteinheit bzw. des Mitnehmers mittels der beiden Schrauben am zu messenden Objekt erhebliche Längsspannungen in Meßrichtung in der Abtasteinheit bzw. im Mitnehmer auf, da der thermische Ausdehnungskoeffizient $\alpha$(A) der Abtasteinheit und der thermische Ausdehnungskoeffizient $\alpha$(M) des

Mitnehmers erheblich größer als der thermische Ausdehnungskoeffizient $\alpha(O)$ des zu messenden Objekts sind. Diese Längsspannungen können zu undefinierten Relativverschiebungen der Abtasteinheit bzw. des Mitnehmers in den Befestigungspunkten am Objekt führen; die Richtung und der Betrag solcher Relativverschiebungen sind nicht vorhersehbar, so daß die damit verbundenen Nullpunktverschiebungen der Meßeinrichtung nicht beherrschbar sind.

In der DE-PS 28 53 771 ist eine Längenmeßeinrichtung beschrieben, bei der ein Träger für einen Maßstab an beiden Enden mittels Befestigungselemente mit einem zu messenden Objekt verbunden ist; der Träger und das Objekt bestehen aus Materialien mit unterschiedlichen thermischen Ausdehnungskoeffizienten. Während das eine Ende des Trägers für den Maßstab direkt mit dem Befestigungselement verbunden ist, befindet sich zwischen dem anderen Ende des Trägers und dem Befestigungselement ein Längenausgleichselement, um dieses Ende des Trägers mit einem translatorischen Freiheitsgrad in Meßrichtung zu lagern, so daß bei thermischen Längenänderungen des Trägers bezüglich des Objekts keine Längskräfte im Träger auftreten, die auf den Maßstab einwirken und die Meßgenauigkeit beeinträchtigen können.

Der DE-OS 32 43 966 entnimmt man eine Längenmeßeinrichtung, bei der ein Träger in Form eines Gehäuses für einen Maßstab in der Mitte und an beiden Enden mittels jeweils eines Befestigungselements mit einem zu messenden Objekt verbunden ist; der Träger für den Maßstab und das Objekt bestehen aus Materialien mit unterschiedlichen thermischen Ausdehnungskoeffizienten. Während der Träger des Maßstabs in der Mitte direkt mit dem Befestigungselement verbunden ist, sind die beiden Enden des Trägers über jeweils ein Längenausgleichselement mit den Befestigungselementen zur translatorisch beweglichen Lagerung der beiden Enden in Meßrichtung verbunden, so daß die Lage des Maßstabs bezüglich des zu messenden Objekts bei Temperaturänderungen im wesentlichen erhalten bleibt.

Aus der DE-PS 31 06 701 ist eine Längenmeßeinrichtung für Werkzeugmaschinen bekannt, bei der zur Kompensation thermischer Längenänderungen von Maschinenteilen ein Dehnstab aus einem Material mit hohem thermischen Ausdehnungskoeffizienten mit einem Ende an einem Maschinenteil und mit dem anderen Ende an einem Maßstab befestigt ist, wobei die Wärmedehnung des Dehnstabes gleich derjenigen des Maschinenteils ist, so daß die Wärmedehnung des Maschinenteils von der Längenmeßeinrichtung erfaßt und kompensiert wird.

Der Erfindung liegt die Aufgabe zugrunde, bei einer Längen- oder Winkelmeßeinrichtung der genannten Gattung thermisch bedingte Relativverschiebungen zwischen dem Abtastpunkt der Abtasteinheit und dem zugehörigen Bezugspunkt des zu messenden Objekts auszuschließen.

Diese Aufgabe wird durch die Merkmale der unabhängigen Ansprüche 1 und 2 gelöst.

Die mit der Erfindung erzielten Vorteile bestehen insbesondere darin, daß durch die vorgeschlagene Ankopplung der Abtasteinheit direkt oder über einen Mitnehmer am zu messenden Objekt auf einfache Weise ohne zusätzliche Elemente trotz unterschiedlicher thermischer Ausdehnungskoeffizienten des Objekts, des Mitnehmers und der Abtasteinheit bei Temperaturänderungen keine Relativverschiebungen zwischen dem Abtastpunkt der Abtasteinheit und dem zugehörigen Bezugspunkt des zu messenden Objekts auftreten können, die Nullpunktverschiebungen der Meßeinrichtung mit den entsprechenden Meßfehlern zur Folge haben. Durch die dadurch erzielte Meßgenauigkeit werden insbesondere bei Bearbeitungsmaschinen die Güte der Werkstücke erhöht und die Ausschußquote erheblich vermindert.

Vorteilhafte Ausbildungen der Erfindung entnimmt man den Unteransprüchen.

Ausführungsbeispiele der Erfindung werden anhand der Zeichnung näher eläutert.

Es zeigen

Figur 1     eine erste ungekapselte Längenmeßeinrichtung;

Figur 2     eine zweite ungekapselte Längenmeßeinrichtung;

Figur 3     eine erste gekapselte Längenmeßeinrichtung;

Figur 4     eine zweite gekapselte Längenmeßeinrichtung und

Figur 5     eine dritte gekapselte Längenmeßeinrichtung.

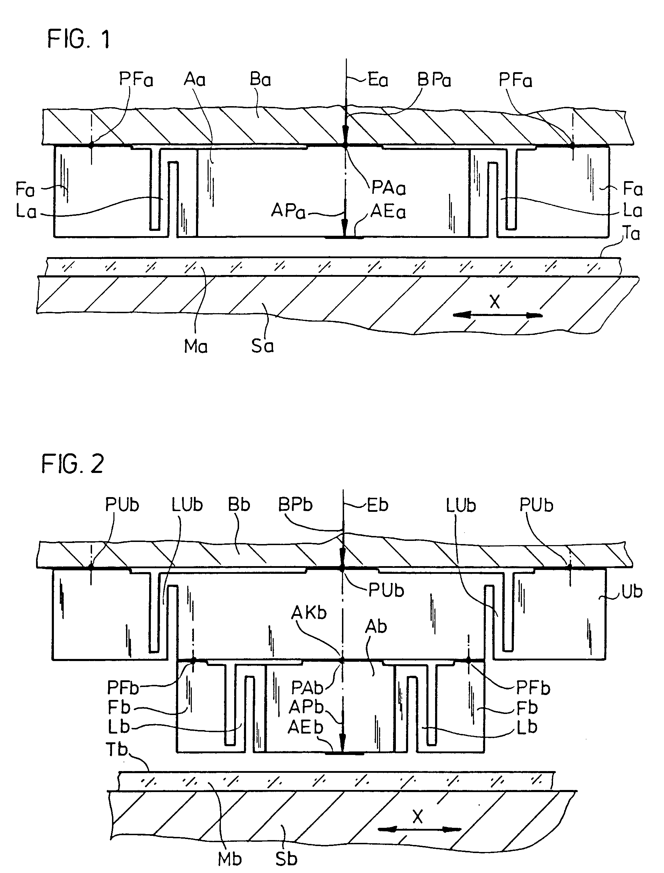

In Figur 1 ist schematisch eine erste ungekapselte Längenmeßeinrichtung in einer Längsansicht dargestellt. An einem ersten zu messenden Objekt Sa in Form eines Schlittens einer nicht gezeigten Bearbeitungsmaschine ist eine Maßverkörperung Ma in beliebiger Weise, beispielsweise mittels nicht gezeigter Spannpratzen, befestigt. An einem zweiten zu messenden Objekt Ba in Form des Betts der Bearbeitungsmaschine ist mit einem mittleren Befestigungspunktes PAa eine Abtasteinheit Aa befestigt, die mit einem Abtastelement AEa eine Teilung Ta der Maßverkörperung Ma zur Messung der Relativlage der beiden Objekte Sa, Ba abtastet. An den beiden Enden ist die Abtasteinheit Aa jeweils mittels eines Befestigungselements Fa mit einem weiteren Befestigungspunkt PFa am zweiten Objekt Ba befestigt. Zwischen den beiden Enden der Abtasteinheit Aa und den weiteren Befestigungspunkten PFa ist in integrierter Form jeweils ein mäanderförmiges Längenausgleichselement La in den beiden Befestigungselementen Fa vorgesehen, die bei Temperaturänderungen eine Lagerung der beiden Enden der Abtasteinheit Aa mit jeweils einem translatorischen Freiheitsgrad in Meßrichtung X erlauben.

Der Abtastpunkt APa (Abtaststelle) des Abtastelements AEa der Abtasteinheit Aa und der zugehörige Bezugspunkt BPa des zweiten Objekts Ba liegen bei thermischer Normalbedingung (z. B. 20 °C) in einer Ebene Ea senkrecht zur Meßrichtung X. Es mögen das zweite Objekt Ba aus Grauguß mit einem thermischen Ausdehnungskoeffizienten $\alpha(Ba) = 10 \cdot 10^{-6}$ $K^{-1}$ und die Abtasteinheit Aa aus Kunststoff mit einem thermischen Ausdehnungskoeffizienten $\alpha(Aa) = 35 \cdot 10^{-6}$ $K^{-1}$ bestehen. Da der mittlere Befestigungspunkt PAa der Abtasteinheit Aa am zweiten Objekt Ba ebenfalls in der Ebene Ea liegt, treten bei Temperaturänderungen bezüglich der thermischen Normalbedingung trotz der unterschiedlichen thermischen Ausdehnungskoeffizienten $\alpha(Aa)$, $\alpha(Ba)$ der Abtasteinheit Aa und des zweiten Objekts Ba keine Relativverschiebungen zwischen dem Abtastpunkt APa der Abtasteinheit Aa und dem zugehörigen Bezugspunkt BPa des zweiten Objekts Ba auf, so daß keine Nullpunktverschiebungen der Meßeinrichtung mit den entsprechenden Meßfehlern auftreten können. Bei einem Einsatz der Längenmeßeinrichtung an einer Meßmaschine, bei der gegenüber einer Bearbeitungsmaschine keine Erschütterungen auftreten, können auch wahlweise ein Befestigungselement Fa oder beide Befestigungselemente Fa mitsamt dem Längenausgleichselement La entfallen.

In Figur 2 ist schematisch eine zweite ungekapselte Längenmeßeinrichtung in einer Längsansicht dargestellt. An einem ersten zu messenden Objekt Sb in Form eines Schlittens einer nicht gezeigten Bearbeitungsmaschine ist eine Maßverkörperung Mb in beliebiger Weise, beispielsweise mittels nicht gezeigter Spannpratzen, befestigt. An einem zweiten zu messenden Objekt Bb in Form des Bettes der Bearbeitungsmaschine ist ein Mitnehmer Ub mit einem mittleren Befestigungspunkt PUb und an beiden Enden mit zwei weiteren Befestigungspunkten PUb befestigt; zwischen dem mittleren Befestigungspunkt PUb und den beiden weiteren Befefestigungspunkten PUb ist jeweils ein mäanderförmiges Längenausgleichselement LUb in integrierter Form im Mitnehmer Ub vorgesehen. Eine Abtasteinheit Ab ist mit einem mittleren Befestigungspunkt PAb in einem Ankopplungspunkt AKb am Mitnehmer Ub befestigt und tastet mit einem Abtastelement AEb eine Teilung Tb der Maßverkörperung Mb zur Messung der Relativlage der beiden Objekte Sb, Bb ab. An den beiden Enden ist die Abtasteinheit Ab jeweils mittels eines Befestigungselements Fb mit einem weiteren Befestigungspunkt PFb am Mitnehmer Ub befestigt. Zwischen den beiden Enden der Abtasteinheit Ab und den weiteren Befestigungspunkten PFb ist in integrierter Form jeweils ein mäanderförmiges Längenausgleichselement Lb in den beiden Befestigungselementen Fb vorgesehen. Die beiden mäanderförmigen Längenausgleichselemente LUb des Mitnehmers Ub und die beiden Längenausgleichselemente Lb der Abtasteinheit Ab erlauben bei Temperaturänderungen eine Lagerung der beiden Enden des Mitnehmers Ub und der beiden Enden der Abtasteinheit Ab mit jeweils einem translatorischen Freiheitsgrad in Meßrichtung X.

Der Abtastpunkt APb (Abtaststelle) des Abtastelements AEb der Abtasteinheit Ab und der zugehörige Bezugspunkt BPb des zweiten Objekts Bb liegen bei thermischer Normalbedingung (z. B. 20 °C) in einer Ebene Eb senkrecht zur Meßrichtung X. Es mögen das zweite Objekt Bb aus Grauguß mit einem thermischen Ausdehnungskoeffizienten $\alpha(Bb) = 10 \cdot 10^{-6}$ $K^{-1}$, der Mitnehmer Ub aus Aluminium mit einem thermischen Ausdehnungskoeffizienten $\alpha(Ub) = 21 \cdot 10^{-6}$ $K^{-1}$ und die Abtasteinheit Ab aus Kunststoff mit einem thermischen Ausdehnungskoeffizienten $\alpha(Ab) = 35 \cdot 10^{-6}$ $K^{-1}$ bestehen. Da der mittlere Befestigungspunkt PUb des Mitnehmers Ub am zweiten Objekt Bb und der mittlere Befestigungspunkt PAb der Abtasteinheit Ab im Ankopplungspunkt AKb am Mitnehmer Ub ebenfalls in der Ebene Eb liegen, treten bei Temperaturänderungen bezüglich der thermischen Normalbedingung trotz der unterschiedlichen thermischen Ausdehnungskoeffizienten $\alpha(Ab)$, $\alpha(Ub)$, $\alpha(Bb)$ der Abtasteinheit Ab, des Mitnehmers Ub und des zweiten Objekts Bb keine Relativverschiebungen zwischen dem Abtastpunkt APb der Abtasteinheit Ab und dem zugehörigen Bezugspunkt BPb des zweiten Objekts Bb auf, so daß keine Nullpunktverschiebungen der Meßeinrichtung mit den entsprechenden Meßfehlern auftreten können. Bei einem Einsatz der Längenmeßeinrichtung an einer Meßmaschine, an der gegenüber einer Bearbeitungsmaschine keine Erschütterungen auftreten, können auch wahlweise ein Befestigungselement Fb oder beide Befestigungselemente Fb mitsamt dem Längenausgleichselement Lb entfallen; desgleichen können auch beim Mitnehmer Ub einer oder beide weiteren Befestigungspunkte PUb mitsamt dem Längenausgleichselement LUb entfallen.

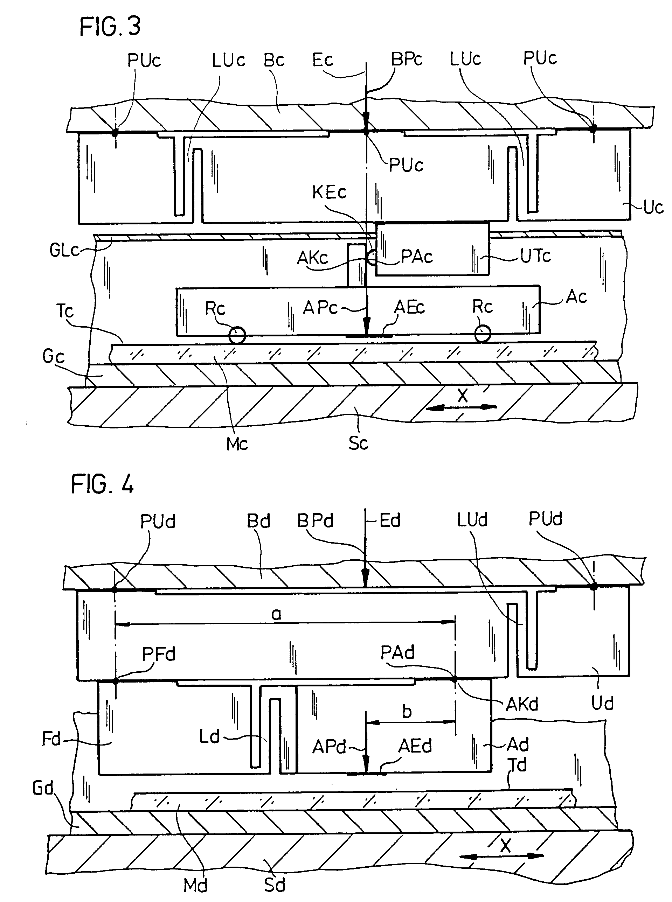

In Figur 3 ist schematisch eine erste gekapselte Längenmeßeinrichtung in einer Längsansicht dargestellt. An einem ersten zu messenden Objekt Sc in Form eines Schlittens einer nicht gezeigten Bearbeitungsmaschine ist ein Träger Gc in Form eines Gehäuses für eine Maßverkörperung Mc in beliebiger Weise, beispielsweise mittels nicht gezeigter Schrauben, befestigt. An einer Innenfläche des Gehäuses Gc ist die Maßverkörperung Mc mittels einer nicht dargestellten Klebeschicht angebracht. An einem zweiten zu messenden Objekt Bc in Form des Betts der Bearbeitungsmaschine ist ein Mitnehmer Uc mit einem mittleren Befestigungspunkt PUc und an beiden Enden mit zwei weiteren Befestigungspunkten PUc befestigt; zwischen dem mittleren Befestigungspunkt PUc und den beiden weiteren Befestigungspunkten PUc ist jeweils ein mäanderförmiges Längenausgleichselement LUc in integrierter Form im Mitnehmer Uc vorgesehen, die bei Temperaturänderungen eine Lagerung der beiden Enden des Mitnehmers Uc mit einem translatorischen Freiheitsgrad in Meßrichtung X erlauben. Eine Abtasteinheit Ac ist mittels Rollen Rc auf der Maßverkörperung Mc und in nicht gezeigter Weise mittels weiterer Rollen auf Innenflächen des Gehäuses Gc als einer von der Führung der zu messenden Objekte Sc, Bc unabhängigen Hilfsführung geführt und tastet mit einem Abtastelement AEc eine Teilung Tc der Maßverkörperung Mc zur Messung der Relativlage der beiden Objekte Sc, Bc ab. Der Mitnehmer UC ragt durch einen von nicht gezeigten Dichtlippen abgedichteten Längsschlitz GLc des Gehäuses Gc mit einem im Querschnitt doppelschwertförmigen Unterteil UTc hindurch, an dem ein in Meßrichtung X steifes Kupplungselement KEc zur gelenkigen Ankopplung der Abtasteinheit Ac in einem Ankopplungspunkt AKc am Mitnehmer Uc angebracht ist; die Abtasteinheit Ac steht im Ankopplungspunkt AKc als Befestigungspunkt PAc mittels einer nicht gezeigten Feder in ständigem Kontakt mit dem Kupplungselement KEc.

Der Abtastpunkt APc (Abtaststelle) des Abtastelements AEc der Abtasteinheit Ac und der zugehörige Bezugspunkt BPc des zweiten Objekts Bc liegen bei thermischer Normalbedingung (z. B. 20 °C) in einer Ebene Ec senkrecht zur Meßrichtung X. Es mögen wiederum das zweite Objekt Bc aus Grauguß, der Mitnehmer Uc aus Aluminium und die Abtasteinheit Ac aus Kunststoff bestehen. Da der mittlere Befestigungspunkt PUc des Mitnehmers Uc am zweiten Objekt Bc und der Ankopplungspunkt AKc der Abtasteinheit Ac am Mitnehmer Uc ebenfalls in der Ebene Ec liegen, treten bei Temperaturänderungen bezüglich der thermischen Normalbedingung trotz der unterschiedlichen thermischen Ausdehnungskoeffizienten der Abtasteinheit Ac, des Mitnehmers Uc und des zweiten Objekts Bc keine Relativverschiebungen zwischen dem Abtastpunkt APc der Abtasteinheit Ac und dem zugehörigen Bezugspunkt BPc des zweiten Objekts Bc auf, so daß keine Nullpunktverschiebungen der Meßeinrichtung mit den entsprechenden Meßfehlern auftreten können. Bei einem Einsatz der Längenmeßeinrichtung an einer Meßmaschine können auch wahlweise beim Mitnehmer Uc einer oder

beide weitere Befestigungspunkte PUc mitsamt dem Längenausgleichselement LUc entfallen.

In Figur 4 ist schematisch eine zweite gekapselte Längenmeßeinrichtung in einer Längsansicht dargestellt. An einem ersten zu messenden Objekt Sd in Form eines Schlittens einer nicht gezeigten Bearbeitungsmaschine ist ein Träger Gd in Form eines Gehäuses für eine Maßverkörperung Md in beliebiger Weise, beispielsweise mittels nicht gezeigter Schrauben, befestigt. An einer Innenfläche des Gehäuses Gd ist die Maßverkörperung Md mittels einer nicht gezeigten Klebeschicht angebracht. An einem zweiten zu messenden Objekt Bd in Form des Betts der Bearbeitungsmaschine ist ein Mitnehmer Ud am ersten Ende mit einem ersten Befestigungspunkt PUd und am zweiten Ende mit einem zweiten Befestigungspunkt PUd befestigt. Eine Abtasteinheit Ad ist am ersten Ende mit einem ersten Befestigungspunkt PAd in einem Ankopplungspunkt AKd am Mitnehmer Ud befestigt und tastet mit einem Abtastelement AEd eine Teilung Td der Maßverkörperung Md zur Messung der Relativlage der beiden Objekte Sd, Bd ab. Am zweiten Ende ist die Abtasteinheit Ad mittels eines Befestigungselements Fd mit einem zweiten Befestigungspunkt PFd am Mitnehmer Ud befestigt. Zwischen dem zweiten Ende der Abtasteinheit Ad und dem zweiten Befestigungspunkt PFd ist in integrierter Form ein mäanderförmiges Längenausgleichselement Ld im Befestigungselement Fd vorgesehen. Zwischen dem Ankopplungspunkt AKd der Abtasteinheit Ad am Mitnehmer Ud und dem zweiten Befestigungspunkt PUd des Mitnehmers Ud am zweiten Objekt Bd ist ein mäanderförmiges Längenausgleichselement LUd in integrierter Form im Mitnehmer Ud vorgesehen. Das mäanderförmige Längenausgleichselement Ld der Abtasteinheit Ad und das mäanderförmige Längenausgleichselement LUd des Mitnehmers Ud erlauben bei Temperaturänderungen eine Lagerung des zweiten Endes der Abtasteinheit Ad und des zweiten Endes des Mitnehmers Ud mit jeweils einem translatorischen Freiheitsgrad in Meßrichtung X.

Der Abtastpunkt APd (Abtaststelle) des Abtastelements AEd der Abtasteinheit Ad und der zugehörige Bezugspunkt BPd des zweiten Objekts Bd liegen bei thermischer Normalbedingung (z. B. 20 °C) in einer Ebene Ed senkrecht zur Meßrichtung X. Es mögen wiederum das zweite Objekt Bd aus Grauguß mit einem thermischen Ausdehnungskoeffizienten $\alpha(Bd) = 10 \cdot 10^{-6} \ K^{-1}$, der Mitnehmer Ud aus Aluminium mit einem thermischen Ausdehnungskoeffizienten $\alpha(Ud) = 21 \cdot 10^{-6} \ K^{-1}$ und die Abtasteinheit Ad aus Kunststoff mit einem thermischen Ausdehnungskoeffizienten $\alpha(Ad) = 35 \cdot 10^{-6} \ K^{-1}$ bestehen. Da das Abtastelement AEd der Abtasteinheit Ad zwischen dem ersten Befestigungspunkt PUd des Mitnehmers Ud am zweiten Objekt Bd und dem Ankopplungspunkt AKd der Abtasteinheit Ad am Mitnehmer Ud liegt und da zwischen dem ersten Befestigungspunkt PUd des Mitnehmers Ud und dem Ankopplungspunkt AKd der Abtasteinheit Ad ein erster Abstand a sowie zwischen dem Ankopplungspunkt AKd der Abtasteinheit Ad und dem Abtastpunkt APd des Abtastelements AEd ein zweiter Abstand b bestehen, wobei der erste Abstand a und der zweite Abstand b die Bedingung $\alpha(Ud) \cdot a = \alpha(Ad) \cdot b$ erfüllen, treten bei Temperaturänderungen bezüglich der thermischen Normalbedingung trotz der unterschiedlichen thermischen Ausdehnungskoeffizienten der Abtasteinheit Ad, des Mitnehmers Ud und des zweiten Objekts Bd keine Relativverschiebungen zwischen dem Abtastpunkt APd der Abtasteinheit Ad und dem zugehörigen Bezugspunkt BPd des zweiten Objekts Bd auf, so daß keine Nullpunktverschiebungen der Meßeinrichtung mit den entsprechenden Meßfehlern auftreten können.

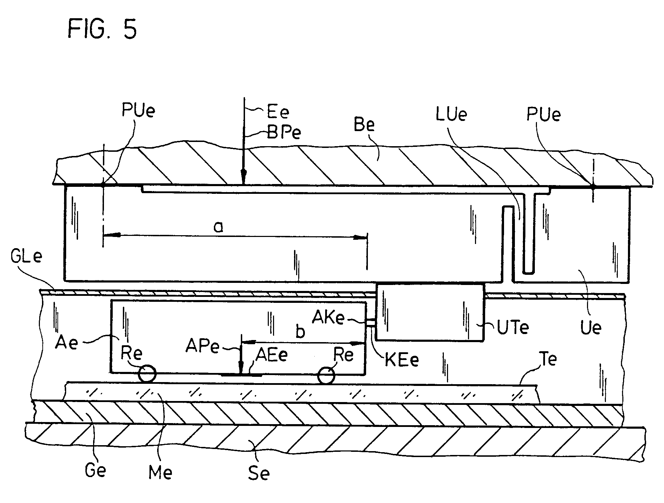

In Figur 5 ist schematisch eine dritte gekapselte Längenmeßeinrichtung in einer Längsansicht dargestellt. An einem ersten zu messenden Objekt Se in Form eines Schlittens einer nicht gezeigten Bearbeitungsmaschine ist ein Träger Ge in Form eines Gehäuses für eine Maßverkörperung Me in beliebiger Weise, beispielsweise mittels nicht gezeigter Schrauben, befestigt. An einer Innenfläche des Gehäuses Ge ist die Maßverkörperung Me mittels einer nicht dargestellten Klebeschicht angebracht. An einem zweiten zu messenden Objekt Be in Form des Betts der Bearbeitungsmaschine ist ein Mitnehmer Ue am ersten Ende mit einem ersten Befestigungspunkt PUe und am zweiten Ende mit einem zweiten Befestigungspunkt PUe befestigt. Eine Abtasteinheit Ae ist mittels Rollen Re auf der Maßverkörperung Me und in nicht gezeigter Weise mittels weiterer Rollen auf Innenflächen des Gehäuses Ge als einer von der Führung der zu messenden Objekte Se, Be unabhängigen Hilfsführung geführt und tastet mit einem Abtastelement AEe eine Teilung Te der Maßverkörperung Me zur Messung der Relativlage der beiden Objekte Se, Be ab. Der Mitnehmer Ue ragt durch einen von nicht gezeigten Dichtlippen abgedichteten Längsschlitz GLe des Gehäuses Ge mit einem im Querschnitt doppelschwertförmigen Unterteil UTe hindurch, an dem ein in Meßrichtung X steifes Kupplungselement KEe zur gelenkigen Ankopplung der Abtasteinheit Ae in einem Ankopplungspunkt AKe am Mitnehmer Ue angebracht ist; die Abtasteinheit Ae steht im Ankopplungspunkt AKe mittels einer nicht gezeigten Feder in ständigem Kontakt mit dem Kupplungselement KEe. Zwischen dem Ankopplungspunkt AKe der Abtasteinheit Ae am Mitnehmer Ue und dem zweiten Befestigungspunkt PUe des Mitnehmers Ue am zweiten Objekt Be ist ein mäanderförmiges Längenausgleichselement LUe in integrierter Form im Mitnehmer Ue vorgesehen; das mäanderförmige Längenausgleichselement LUe des Mitnehmers Ue erlaubt bei Temperaturänderungen eine Lagerung des zweiten Endes des Mitnehmers Ue mit einem translatorischen Freiheitsgrad in Meßrichtung X.

Der Abtastpunkt APe (Abtaststelle) des Abtastelements AEe der Abtasteinheit Ae und der zugehörige Bezugspunkt BPe des zweiten Objekts Be liegen bei thermischer Normalbedingung (z. B. 20 °C) in einer Ebene Ee senkrecht zur Meßrichtung X. Es mögen wiederum das zweite Objekt Be aus Grauguß mit einem thermischen Ausdehnungskoeffizienten $\alpha(Be) = 10 \cdot 10^{-6} \ K^{-1}$, der Mitnehmer Ue aus Aluminium mit einem thermischen Ausdehnungskoeffizienten $\alpha(Ue) = 21 \cdot 10^{-6} \ K^{-1}$ und die Abtasteinheit Ae aus Kunststoff mit einem thermischen Ausdehnungskoeffizienten $\alpha(Ae) = 35 \cdot 10^{-6} \ K^{-1}$ bestehen. Da das Abtastelement AEe der Abtasteinheit Ae zwischen dem ersten Befestigungspunkt PUe des Mitnehmers Ue am zweiten Objekt Be und dem Ankopplungspunkt AKe der Abtasteinheit Ae am Mitnehmer Ue liegt und da zwischen dem ersten Befestigungspunkt PUe des Mitnehmers Ue und dem Ankopplungspunkt AKe der Abtasteinheit Ae ein erster Abstand a sowie zwischen dem Ankopplungspunkt AKe der Abtasteinheit Ae und dem Abtastpunkt APe des Abtastelements AEe ein zweiter Abstand b bestehen, wobei der erste Abstand a und der zweite Abstand b die Bedingung $\alpha(Ue) \cdot a = \alpha(Ae) \cdot b$ erfüllen, treten bei Temperaturänderungen bezüglich der thermischen Normalbedingung trotz der unterschiedlichen thermischen Ausdehnungskoeffizienten der Abtasteeinheit Ae, des Mitnehmers Ue und des zweiten Objekts Be keine Relativverschiebungen zwischen dem Abtastpunkt APe der Abtasteinheit Ae und dem zugehörigen Bezugspunkt BPe des zweiten Objekts Be auf, so daß keine Nullpunktverschiebungen der Meßeinrichtung mit den entsprechenden Meßfehlern auftreten können.

Unter dem Abtastpunkt (Abtaststelle) des Abtastelements der Abtasteinheit wird der Mittelpunkt (Schwerpunkt) des Abtastelements verstanden; beispielsweise bei einer photoelektrischen Abtasteinheit mit einem Abtastteilungsfeld als Abtastelement wird der Abtastpunkt durch den Mittelpunkt (Flächenschwerpunkt) dieses Abtastteilungsfeldes gebildet.

Die Erfindung ist sowohl bei inkrementalen als auch bei absoluten Positionsmeßeinrichtungen mit Erfolg einsetzbar, die beispielsweise auf optischer, lichtelektrischer, magnetischer, kapazitiver oder induktiver Arbeitsweise beruhen.

**Patentansprüche**

1.   Längen- oder Winkelmeßeinrichtung zur Messung der Relativlage zweier Objekte, bei der mit dem ersten Objekt eine Maßverkörperung verbunden ist, deren Teilung von einer mit dem zweiten Objekt verbundenen Abtasteinheit mittels wenigstens eines Abtastelements abgetastet wird, und bei der das zweite Objekt und die Abtasteinheit unterschiedliche thermische Ausdehnungskoeffizienten aufweisen, dadurch gekennzeichnet, daß ein Befestigungspunkt (PAa, PAb, PAc) der Abtasteinheit (Aa, Ab, Ac) am zweiten Objekt (Ba, Bb, Bc) und ein Abtastpunkt (APa, APb, APc) des Abtastelements (AEa, AEb, AEc) der Abtasteinheit (Aa, Ab, Ac) in einer Ebene (Ea, Eb, Ec) senkrecht zur Meßrichtung X liegen.

2. Längen- oder Winkelmeßeinrichtung zur Messung der Relativlage zweier Objekte, bei der mit dem ersten Objekt eine Maßverkörperung verbunden ist, deren Teilung von einer mit dem zweiten Objekt über einen Mitnehmer verbundenen Abtasteinheit mittels wenigstens eines Abtastelements abgetastet wird, und bei der das Objekt, der Mitnehmer und die Abtasteinheit unterschiedliche thermische Ausdehnungskoeffizienten aufweisen, dadurch gekennzeichnet, daß der Mitnehmer (Ud, Ue) einen Befestigungspunkt (PUd, PUe) am zweiten Objekt (Bd, Be) und die Abtasteinheit (Ad, Ae) einen Ankoppelungspunkt (AKd, AKe) am Mitnehmer (Ud, Ue) aufweist, daß das Abtastelement (AEd, AEe) der Abtasteinheit (Ad, Ae) zwischen dem Befestigungspunkt (PUd, PUe) des Mitnehmers (Ud, Ue) am zweiten Objekt (Bd, Be) und dem Ankoppelungspunkt (AKd, AKe) der Abtasteinheit (Ad, Ae) am Mitnehmer (Ud, Ue) liegt, daß zwischen dem Befestigungspunkt (PUd, PUe) des Mitnehmers (Ud, Ue) und dem Ankopplungspunkt (AKd, AKe) der Abtasteinheit (Ad, Ae) ein erster Abstand a sowie zwischen dem Ankopplungspunkt (AKd, AKe) der Abtasteinheit (Ad, Ae) und dem Abtastpunkt (APd, APe) des Abtastelements (AEd, AEe) ein zweiter Abstand b bestehen und daß der erste Abstand a und der zweite Abstand b die Bedingung $\alpha$(Ud, Ue) $\cdot$ a = $\alpha$(Ad, Ae) $\cdot$ b erfüllen, wobei $\alpha$(Ud, Ue) der thermische Ausdehnungskoeffizient des Mitnehmers (Ud, Ue) und $\alpha$(Ad, Ae) der thermische Ausdehnungskoeffizient der Abtasteinheit (Ad, Ae) bedeuten.

3. Meßeinrichtung nach Anspruch 1, bei der die Abtasteinheit über einen Mitnehmer mit dem zweiten Objekt verbunden ist und bei der das zweite Objekt, der Mitnehmer und die Abtasteinheit unterschiedliche thermische Ausdehnungskoeffizienten aufweisen, dadurch gekennzeichnet, daß der Befestigungspunkt (PUb, PUc) des Mitnehmers (Ub, Uc) am zweiten Objekt (Bb, Bc) und der Ankopplungspunkt (AKb, AKc) der Abtasteinheit (Ab, Ac) am Mitnehmer (Ub, Uc) in der zur Meßrichtung X senkrechten Ebene (Eb, Ec) des Abtastpunktes (APb, APc) des Abtastelements (AEb, AEc) der Abtasteinheit (Ab, Ac) liegen.

4. Meßeinrichtung nach Anspruch 1, dadurch gekennzeichnet, daß die Abtasteinheit (Aa) zusätzlich zum mittleren Befestigungspunkt (PAa) in der Ebene (Ea) des Abtastpunktes (APa) des Abtastelements (AEa) wenigstens an einem Ende mittels eines Befestigungselements (Fa) mit einem weiteren Befestigungspunkt (PFa) am zweiten Objekt (Ba) befestigt ist und daß zwischen dem Ende der Abtasteinheit (Aa) und dem Befestigungselement (Fa) ein Längenausgleichselement (La) angeordnet ist.

5. Meßeinrichtung nach Anspruch 3, dadurch gekennzeichnet, daß der Mitnehmer (Ub, Uc) zusätzlich zum mittleren Befestigungspunkt (PUb, PUc) in der Ebene (Eb, Ec) des Abtastpunktes (APb, APc) des Abtastelements (AEb, AEc) der Abtasteinheit (Ab, Ac) wenigstens an einem Ende mit einem weiteren Befestigungspunkt (PUb, PUc) am zweiten Objekt (Bb, Bc) befestigt ist und daß zwischen dem mittleren Befestigungspunkt (PUb, PUc) und dem weiteren Befestigungspunkt (PUb, PUc) ein Längenausgleichselement (LUb, LUc) angeordnet ist.

6. Meßeinrichtung nach den Ansprüchen 3 und 5, dadurch gekennzeichnet, daß die Abtasteinheit (Ab) zusätzlich zum mittleren Befestigungspunkt (PAb) im Ankopplungspunkt (AKb) am Mitnehmer (Ub) wenigstens an einem Ende mittels eines Befestigungselements (Fb) mit einem weiteren Befestigungspunkt (PFb) am Mitnehmer (Ub) befestigt ist und daß zwischen dem Ende der Abtasteinheit (Ab) und dem Befestigungselement (Fb) ein Längenausgleichselement (Lb) angeordnet ist.

7. Meßeinrichtung nach den Ansprüchen 3 und 5, dadurch gekennzeichnet, daß die Abtasteinheit (Ac) an einer von der Führung der zu messenden Objekte (Sc, Bc) unabhängigen Hilfsführung an der Maßverkörperung (Mc) und/oder an einem Träger (Gc) für die Maßverkörperung (Mc) geführt und am Mitnehmer (Uc) mittels eines in Meßrichtung X steifen Kupplungselements (KEc) gelenkig im Ankopplungspunkt (AKc) angekoppelt ist.

8. Meßeinrichtung nach Anspruch 2, dadurch gekennzeichnet, daß der Mitnehmer (Ud, Ue) zusätzlich zum ersten Befestigungspunkt (PUd, PUe) am ersten Ende mit einem zweiten Befestigungspunkt (PUd, PUe) am zweiten Ende am zweiten Objekt (Bd, Be) befestigt ist und daß zwischen dem Ankopplungspunkt (AKd, AKe) der Abtasteinheit (Ad, Ae) am Mitnehmer (Ud, Ue) und dem zweiten Befestigungspunkt (PUd, PUe) des Mitnehmers (Ud, Ue) am zweiten Objekt (Bd, Be) ein Längenausgleichselement (LUd, LUe) angeordnet ist.

9. Meßeinrichtung nach den Ansprüchen 2 und 8, dadurch gekennzeichnet, daß die Abtasteinheit (Ad) zusätzlich zum ersten Befestigungspunkt (PAd) am ersten Ende im Ankopplungspunkt (AKd) am Mitnehmer (Ud) am zweiten Ende mittels eines Befestigungselements (Fd) mit einem zweiten Befestigungspunkt (PFd) am Mitnehmer (Ud) befestigt ist und daß zwischen dem zweiten Ende der Abtasteinheit (Ad) und dem Befestigungselement (Fd) ein Längenausgleichselement (Ld) angeordnet ist.

10. Meßeinrichtung nach den Ansprüchen 2 und 8, dadurch gekennzeichnet, daß die Abtasteinheit (Ae) an einer von der Führung der zu messenden Objekte (Se, Be) unabhängigen Hilfsführung an der Maßverkörperung (Me) und/oder an einem Träger (Ge) für die Maßverkörperung (Me) geführt und an den Mitnehmer (Ue) mittels eines in Meßrichtung X steifen Kupplungselements (KEe) gelenkig im Ankopplungspunkt (AKe) angekoppelt ist.

11. Meßeinrichtung nach den Ansprüchen 4, 6 und 9, dadurch gekennzeichnet, daß das Längenausgleichselement (La, Lb, Ld) im Befestigungselement (Fa, Fb, Fd) integriert ist.

12. Meßeinrichtung nach den Ansprüchen 5 und 8, dadurch gekennzeichnet, daß das Längenausgleichselement (LUb, LUc, LUd, LUe) im Mitnehmer (Ub, Uc, Ud, Ue) integriert ist.

## Claims

1. Length or angle measuring device for measuring the relative position of two objects, wherein the first object has connected to it a measurement embodiment whose scale is scanned by means of at least one scanning element by a scanning unit connected to the second object, and wherein the second object and the scanning unit have different coefficients of thermal expansion, characterised in that a fixing point (PAa, PAb, PAc) of the scanning unit (Aa, Ab, Ac) to the second object (Ba, Bb, Bb) and a scanning point (APa, APb, APc) of the scanning element (AEa, AEb, AEc) of the scanning unit (Aa, Ab, Ac) are located in a plane (Ea, Eb, Ec) perpendicular to the direction of measurement X.

2. Length or angle measuring device for measuring the relative position of two objects, wherein the first object has connected to it a measurement embodiment whose scale is scanned by means of at least one scanning element by a scanning unit connected to the second object through the medium of a carrier member, and wherein the object, the carrier member and the scanning unit have different coefficients of thermal expansion, characterised in that the carrier member (Ud, Ue) has a fixing point (PUd, PUe) to the second object (Bd, Be) and the scanning unit (Ad, Ae) has a coupling point (AKd, AKe) to the carrier member (Ud, Ue), the scanning element (AEd, AEe) of the scanning unit (Ad, Ae) is located between the fixing point (PUd, PUe) of the carrier member (Ud, Ue) to the second object (Bd, Be) and the coupling point (AKd, AKe) of the scanning unit (Ad, Ae) to the carrier member (Ud, Ue), there is a first distance a between the fixing point (PUd, PUe) of the carrier member (Ud, Ue) and the coupling point (AKd, AKe) of the scanning unit (Ad, Ae) and a second distance b between the coupling point (AKd, AKe) of the scanning unit (Ad, Ae) and the scanning point (APd,APe) of the scanning element (AEd, AEe), and the first distance a and the second distance b satisfy the condition $\alpha$(Ud, Ue) • a = $\alpha$(Ad, Ae) • b, $\alpha$(Ud, Ue) signifying the coefficient of thermal expansion of the carrier member (Ud, Ue) and $\alpha$(Ad, Ae) signifying the coefficient of thermal expansion of the scanning unit (Ad, Ae).

3. Measuring device according to claim 1, wherein the scanning unit is connected to the second object through the medium of a carrier member and wherein the second object, the carrier member and the scanning unit have different coefficients of thermal expansion, characterised in that the fixing point (PUb, PUc) of the carrier member (Ub, Uc) to the second object (Bb, Bc) and the coupling point (AKb, AKc) of the scanning unit (Ab,Ac) to the carrier member (Ub, Uc) are located in the plane (Eb, Ec) of the scanning point (APb, APc) of the scanning element (AEb, AEc) of the scanning unit (Ab, Ac) extending perpendicular to the direction of measurement X.

4. Measuring device according to claim 1, characterised in that in addition to the central fixing point (PAa) in the plane (Ea) of the scanning point (APa) of the scanning element (AEa), the scanning unit (Aa) is fixed at least at one end by means of a fixing element (Fa) with another fixing point (PFa) to the second object (Ba) and a length compensating element (La) is arranged between the end of the scanning unit (Aa) and the fixing element (Fa).

5. Measuring device according to claim 3, characterised in that in addition to the central fixing point (PUb, PUc) in the plans (Eb, Ec) of the scanning point (APb, APc) of the scanning element (AEb, AEc) of the scanning unit (Ab, Ac), the carrier member (Ub, Uc) is fixed at least at one end with another fixing point (PUb, PUc) to the second object (Bb, Bc) and a length compensating element (LUb, LUc) is arranged between the central fixing point (PUb, PUc) and the additional fixing point (PUb, PUc).

6. Measuring device according to claims 3 and 5, characterised in that in addition to the central fixing point (PAb) at the coupling point (AKb) to the carrier member (Ub), the scanning unit (Ab) is fixed at least at one end by means of a fixing element (Fb) with another fixing point (PFb) to the carrier member (Ub) and a length compensating element (Lb) is arranged between the end of the scanning unit (Ab) and the fixing element (Fb).

7. Measuring device according to claims 3 and 5, characterised in that the scanning unit (Ac) is guided on an auxiliary guide independent of the guiding of the objects to be measured (Sc, Bc) on the measurement embodiment (Mc) and/or on a support (Gc) for the measurement embodiment (Mc) and is coupled to the carrier member (Uc) in articulated fashion at the coupling point (AKc) by means of a coupling element (KEc) rigid in the direction of measurement X.

8. Measuring device according to claim 2, characterised in that in addition to the first fixing point (PUd, PUe) at the first end, the carrier member (Ud, Ue) is fixed to the second object (Bd, Be) by a second fixing point (PUd, PUe) at the second end, and a length compensating element (LUd, LUe) is arranged between the coupling point (AKd, AKe) of the scanning unit (Ad,Ae) to the carrier member (Ud, Ue) and the second fixing point (PUd, PUe) of the carrier member (Ud, Ue) to the second object (Bd, Be).

9. Measuring device according to claims 2 and 8, characterised in that in addition to the first fixing point (PAd) at the first end at the coupling point (AKd) to the carrier member (Ud), the scanning unit (Ad) is fixed at the second end to the carrier member (Ud) by means of a fixing element (Fd) with a second fixing point (PFd) and a length compensating element (Ld) is arranged between the second end of the scanning unit (Ad) and the fixing element (Fd).

10. Measuring device according to claims 2 and 8, characterised in that the scanning unit (Ae) is guided on an auxiliary guide independent of the guiding of the objects to be measured (Se, Be) on the measurement embodiment (Me) and/or on a support (Ge) for the measurement embodiment (Me) and is coupled to the carrier member (Ue) in articulated fashion at the coupling point (AKe) by means of a coupling element (KEe) rigid in the direction of measurement X.

11. Measuring device according to claim 4, 6 and 9, characterised in that the length compensating element (La, Lb, Ld) is integrated in the fixing element (Fa, Fb, Fd).

12. Measuring device according to claims 5 and 8, characterised in that the length compensating element (LUb, LUc, LUd, LUe) is integrated in the carrier member (Ub, Uc, Ud, Ue).

**Revendications**

1. Dispositif de mesure de longueurs ou d'angles pour la mesure de la position relative de deux objets, dans lequel une mesure matérialisée liée au premier objet porte une graduation qui est lue par au moins un organe de lecture d'une unité de lecture liée au deuxième objet et dans lequel le deuxième objet et l'unité de lecture ont des coefficients de dilatation thermique différents, caractérisé en ce qu'un point de fixation (PAa, PAb, PAc) de l'unité de lecture (Aa, Ab, Ac) sur le deuxième objet (Ba, Bb, Bc) et un point de lecture (APa, APb, APc) de l'organe de lecture (AEa, AEb, AEc) de l'unité de lecture (Aa, Ab, Ac) sont situés dans un plan (Ea, Eb, Ec) qui est perpendiculaire à la direction de mesure X.

2. Dispositif de mesure de longueurs ou d'angles pour la mesure de la position relative de deux objets, dans lequel une mesure matérialisée liée au premier objet porte une graduation qui est lue par au moins un organe de lecture d'une unité de lecture liée au deuxième objet par l'intermédiaire d'un entraîneur et dans lequel l'objet, l'entraîneur et l'unité de lecture ont des coefficients de dilatation thermique différents, caractérisé en ce que l'entraîneur (Ud, Ue) comporte un point de fixation (PUd, PUe) sur le deuxième objet (Bd, Be) et l'unité de lecture (Ad, Ae) comporte un point de couplage (AKd, AKe) avec l'entraîneur (Ud, Ue), en ce que l'organe de lecture (AEd, AEe) de l'unité de lecture (Ad, Ae) est situé entre le point de fixation (PUd, PUe) de l'entraîneur (Ud, Ue) sur le deuxième objet (Bd, Be) et le point de couplage (AKd, AKe) de l'unité de lecture (Ad, Ae) avec l'entraîneur (Ud, Ue), en ce qu'il existe, entre le point de fixation (PUd, PUe) de l'entraîneur (Ud, Ue) et le point de couplage (AKd, AKe) de l'unité de lecture (Ad, Ae), une première distance a et, entre le point de couplage (AKd, AKe) de l'unité de lecture (Ad, Ae) et le point de lecture (APd, APe) de l'organe de lecture (AEd, AEe), une deuxième distance b et en ce que la première distance a et la deuxième distance b satisfont la condition $\alpha$ (Ud, Ue) * a = $\alpha$ (Ad, Ae) * b, $\alpha$ (Ud, Ue) étant le coefficient de dilatation thermique de l'entraîneur (Ud, Ue) et $\alpha$ (Ad, Ae) étant le coefficient de dilatation thermique de l'unité de lecture (Ad, Ae).

3. Dispositif de mesure selon la revendication 1, dans lequel l'unité de lecture est reliée au deuxième objet par l'intermédiaire d'un entraîneur et dans lequel le deuxième objet, l'entraîneur et l'unité de lecture ont des coefficients de dilatation thermique différents, caractérisé en ce que le point de fixation (PUb, PUc) de l'entraîneur (Ub, Uc) sur le deuxième objet (Bb, Bc) et le point de couplage (AKb, AKc) de l'unité de lecture (Ab, Ac) avec l'entraîneur (Ub, Uc) sont situés dans le plan (Eb, Ec) perpendiculaire à la direction de mesure X contenant le point de lecture (APb, APc) de l'organe de lecture (AEb, AEc) de l'unité de lecture (Ab, Ac).

4. Dispositif de mesure selon la revendication 1, caractérisé en ce que, en plus du point de fixation central (PAa) situé dans le plan (Ea) du point de lecture (APa) de l'organe de lecture (AEa), l'unité de lecture (Aa) est fixée à l'une de ses extrémités au moins à un point de fixation supplémentaire (PFa) sur le deuxième objet (Ba) à l'aide d'un organe de fixation (Fa) et en ce qu'un organe de compensation de la dilatation linéaire (La) est disposé entre l'extrémité de l'unité de lecture (Aa) et l'organe de fixation (Fa).

5. Dispositif de mesure selon la revendication 3, caractérisé en ce que, en plus du point de fixation central (PUb, PUc) situé dans le plan (Eb, Ec) du point de lecture (APb, APc) de l'organe de lecture (AEb, AEc), de l'unité de lecture (Ab, Ac), l'entraîneur (Ub, Uc) est fixé à l'une de ses extrémités au moins à un point de fixation supplémentaire (PUb, PUc) sur le deuxième objet (Bb, Bc) et en ce qu'un organe de compensation de la dilatation linéaire (LUb, LUc) est disposé entre le point de fixation central (PUb, PUc) et le point de fixation supplémentaire (PUb, PUc).

6. Dispositif de mesure selon les revendications 3 et 5, caractérisé en ce que, en plus du point de fixation central (PAb) situé au point de couplage (AKb) avec l'entraîneur (Ub), l'unité de lecture (Ab) est fixée à l'une de ses extrémités au moins à un point de fixation supplémentaire (PFb) sur l'entraîneur (Ub) à l'aide d'un organe de fixation (Fb) et en ce qu'un organe de compensation de la dilatation linéaire (Lb) est disposé entre l'extrémité de l'unité de lecture (Ab) et l'organe de fixation (Fb).

7. Dispositif de mesure selon les revendications 3 et 5, caractérisé en ce que l'unité de lecture (Ac) est guidée sur la mesure matérialisée (Mc) et/ou sur un support (Gc) de la mesure matérialisée (Mc) à l'aide d'un dispositif de guidage auxiliaire qui est indépendant du dispositif de guidage des objets à mesurer (Sc, Bc) et est couplée de manière articulée au niveau du point de couplage (AKc) avec l'entraîneur (Uc) à l'aide d'un organe de couplage (KEc) rigide dans la direction de mesure X.

8. Dispositif de mesure selon la revendication 2, caractérisé en ce que, en plus du premier point de fixation (PUd, PUe) situé à une première extrémité, l'entraîneur (Ub, Uc) est fixé à sa deuxième extrémité à un deuxième point de fixation (PUd, PUe) sur le deuxième objet (Bd, Be) et en ce qu'un organe de compensation de la dilatation linéaire (LUd, LUd) est disposé entre le point de couplage (AKd, AKe) de l'unité de lecture (Ad, Ae) sur l'entraîneur (Ud, Ue) et le deuxième point de fixation (PUd, PUe) de l'entraîneur (Ud, Ue) sur le deuxième objet (Bd, Be).

9. Dispositif de mesure selon les revendications 2 et 8, caractérisé en ce que, en plus du premier point de fixation (PAd) situé à une première extrémité au point de couplage (AKd) sur l'entraîneur (Ud), l'unité de lecture (Ad) est fixée à sa deuxième extrémité à un deuxième point de fixation (PFd) sur l'entraîneur (Ud) à l'aide d'un organe de fixation (Fd) et en ce qu'un organe de compensation de la dilatation linéaire (Ld) est disposé entre la deuxième extrémité de l'unité de lecture (Ad) et l'organe de fixation (Fd).

10. Dispositif de mesure selon les revendications 2 et 8, caractérisé en ce que l'unité de lecture (Ae) est guidée sur la mesure matérialisée (Me) et/ou sur un support (Ge) de la mesure matérialisée (Me) à l'aide d'un dispositif de guidage auxiliaire qui est indépendant du dispositif de guidage des objets à mesurer (Se, Be) et est couplée de manière articulée au niveau du point de couplage (AKe) à l'entraîneur (Ue) à l'aide d'un organe de couplage (KEe) rigide dans la direction de mesure X.

11. Dispositif selon les revendications 4, 6 et 9, caractérisé en ce que l'organe de compensation de la dilatation linéaire (La, Lb, Ld) est intégré à l'organe de fixation (Fa, Fb, Fd).

12. Dispositif selon les revendications 5 et 8, caractérisé en ce que l'organe de compensation de longueur (LUb, LUc, LUd, LUe) est intégré à l'entraîneur (Ub, Uc, Ud, Ue).

FIG. 1

FIG. 2

FIG. 3

FIG. 4

FIG. 5